# EUROPEAN PATENT SPECIFICATION

(11) **EP 2 783 165 B1**
(45) Date of publication and mention of the grant of the patent: **15.03.2017**
(21) Application number: 12853121.7
(22) Date of filing: 22.11.2012
(51) Int. Cl.: F24F 12/00, F24D 11/02, F24D 17/00, F24D 17/02

(54) **A SYSTEM FOR HEATING SUPPLY AIR WITH SIMULTANEOUS DEFROSTING OF A WATER-EXHAUST AIR HEAT EXCHANGER**
SYSTEM ZUM ERHITZEN VON ZULUFT MIT GLEICHZEITIGEM ENTEISEN EINES WASSER-ABLUFT-WÄRMETAUSCHERS
SYSTÈME POUR CHAUFFER DE L'AIR FOURNI AVEC DÉGIVRAGE SIMULTANÉ D'UN ÉCHANGEUR DE CHALEUR D'EAU-AIR D'ÉCHAPPEMENT

(30) Priority: 23.11.2011 SE 1151114
(43) Date of publication of application: 01.10.2014
(73) Proprietor: Swegon AB, 535 23 Kvänum (SE)
(72) Inventor: MELLBIN, Martin, S-671 31 Arvika (SE); GUSTAVSSON, Andreas, S-531 39 Lidköping (SE); FJAESTAD, Adam, S-671 92 Arvika (SE)
(74) Representative: Bergquist, Kjell Gunnar
(86) International application number: PCT/SE2012/051289
(87) International publication number: WO 2013/081532

(56) References cited:
- WO-A1-2004/072560
- WO-A1-2009/102910
- JP-A- H0 387 547
- US-A- 4 119 142
- US-A1- 2004 134 211
- US-A1- 2004 148 950
- US-A1- 2006 219 381
- US-A1- 2012 085 112

## Description

### TECHNICAL FIELD

The present invention relates to a system for heating supply air, with simultaneous defrosting of a water-exhaust air heat exchanger, when controlling the indoor climate in a building.

Document WO 2004/072560 A1 discloses the preamble of claim 1.

### BACKGROUND OF THE INVENTION

In offices and other larger premises, there is often a need to be able to control the indoor climate separately in different parts of the premises or in individual rooms. An accurate local temperature and ventilation control is required to ensure a sufficient comfort level for the persons present in a building. Also heat generated by electric appliances and heat and exhaled air generated by persons inside the building have to be taken into account for the control. Together with the prevailing weather conditions, these factors have a large influence on the instantaneous demand for heating, cooling and ventilation capacity.

Different systems for controlling the indoor climate in buildings are known previously. For instance, US2004/0148950 A1 discloses an air-conditioning system for a building that comprises a hot water circuit, a cold water circuit and several local air conditioning units. Each of the local air conditioning units comprises a fan for blowing air into a space in the building, a heating coil connected to the hot water circuit and/or a cooling coil connected to the cold water circuit. At least one temperature control system allows control of the heating power of the heating coils and the cooling power of the cooling coils. A calorific energy management system is provided with a heat pump for transferring calorific energy from the cold water system to the hot water system, from the cold water system to the outdoor air and from the outdoor air to the hot water system. The calorific energy management system is capable of managing the calorific energy transfers by means of a three level control system so as to optimize the energy consumption.

In systems for controlling the indoor climate in buildings, it is common that at least one heat exchanger is arranged in connection with the exhaust air duct. Such a heat exchanger can, for example, be a cross-flow or counter-flow heat exchanger (also called plate heat exchangers), and can be used for reducing the total energy consumption of the system by recovering a portion of the heat energy from the exhaust air before it is discharged into the outdoor air. Thus, such a heat exchanger in connection with the exhaust air duct transfers heat energy from the exhaust air flowing out to the outdoor air flowing in. In certain conditions, frost or ice may form on the heat exchanger, which then has to go through a defrost cycle, during which the heat exchanger is heated to melt the ice. A disadvantage of such a defrost cycle is that it takes long time in the previously known systems and thus reduces the effective time during which the heat exchanger can be used for its normal purpose, that is to say heat recovery, which results in an undesirably high energy consumption.

### SUMMARY OF THE INVENTION

It is therefore a first object of the invention to provide a more energy efficient system for controlling the indoor climate in a building, by designing the system such that the time that a heat exchanger arranged in connection with the exhaust air duct has to be operated in a defrost cycle can be minimized and the time for energy recovery from the exhaust air thereby can be maximized.

This first object is achieved by means of a system according to claim 1 for heating supply air, with simultaneous defrosting of a water-exhaust air heat exchanger, when controlling the indoor climate in a building, which at least comprises
- a first air duct having first input means for introducing outdoor air into the system and first output means for discharging outdoor air treated in the system as supply air into the interior of the building,
- a second air duct having second input means for introducing exhaust air from the interior of the building into the system and second output means for discharging exhaust air treated in the system into the outdoor air outside the building,
- an exhaust-supply air heat exchanger, which is arranged in connection with said first and second air ducts for selective transfer of heat from said exhaust air being treated in the system to said outdoor air being treated in the system or from said outdoor air being treated in the system to said exhaust air being treated in the system,
- a water system having a hot water circuit and a cold water circuit,
- a water-supply air heat exchanger, which is arranged in connection with said first air duct for selective connection to said hot water circuit or said cold water circuit for transfer of heat from said hot water circuit to said outdoor air being treated in the system or from said outdoor being treated in the system to said cold water circuit,
- said water-exhaust air heat exchanger, which is arranged in connection with said second air duct for selective connection to said hot water circuit or said cold water circuit for transfer of heat from said hot water circuit to said exhaust air being treated in the system or from said exhaust air being treated in the system to said cold water circuit,
- a heat pump, which is arranged in connection with said water system for selective transfer of heat from the hot water circuit to the cold water circuit or from the cold water circuit to the hot water circuit,
wherein the exhaust-supply air heat exchanger is designed as a rotary heat exchanger, wherein the rotary heat exchanger, with respect to the flow direction in the second air duct, is positioned upstream of the water-exhaust air heat exchanger, and
wherein the rotary heat exchanger has an efficiency correlating to rotational speed and is provided with rotational speed control means for enabling defrosting of the water-exhaust air heat exchanger by means of a reduction of said rotational speed in order to obtain an elevated temperature of the exhaust air passing through the water-exhaust air heat exchanger in combination with the hot water circuit simultaneously being connected to the water-exhaust air heat exchanger,
and wherein the rotational speed control means comprise an electric drive motor for driving the rotation of the rotary heat exchanger, wherein the electric drive motor is adapted to be capable of being controlled to a normal rotational speed during normal operation, in order to provide the highest possible heat transfer capacity of the rotary heat exchanger, and to be capable of being controlled to said reduced rotational speed during a defrost cycle, in order to provide the lowest possible heat transfer capacity of the rotary heat exchanger that is appropriate taking into account other prevailing system conditions at the moment, and thereby the highest possible temperature of the exhaust air passing through the water-exhaust air heat exchanger,
and wherein the hot water circuit provides hot water for use in the water-supply air heat exchanger in said heating of supply air and in the water-exhaust air heat exchanger in the defrosting thereof.

Owing to the shorter time required for the defrost cycle, the design according to the invention provides a very energy efficient system, at the same time as the cold water and hot water circuits of the water system provide respective reservoirs of cold and hot water, which are always available for use in the system's water-supply air heat exchanger and water-exhaust air heat exchanger, respectively, for use in heating and cooling batteries in the system's local comfort modules, for storage of heating and cooling energy, respectively, for use in the heat pump on the hot and the cold side, respectively, and/or for use as hot and cold tap water, respectively, in the building, if desired. Owing to the water carried heat storage capacity of the system according to the invention, temporary fluctuations in the demand for cooling, heating and ventilation can be compensated for, so that the system according to the invention, together with the local comfort modules, can continue to control the local indoor climate toward desired target values independently of whether the system is operated in a heating mode, a cooling mode and/or a defrosting mode.

Other objects, advantages and features of the present invention will become apparent from the following description.

### BRIEF DESCRIPTION OF THE DRAWINGS

In the following, a number of embodiments of the invention will be described more closely, only as examples and with reference to the accompanying schematic drawings, in which:
Fig. 1 schematically illustrates the functional principle of a system for controlling the indoor climate in a building, wherein the system is shown in an operating mode for heating the supply air with simultaneous heat recovery from the exhaust air;
Fig. 2 schematically illustrates the system of Fig. 1 in an operating mode for cooling the supply air with simultaneous transfer of heat to the exhaust air;
Fig. 3 schematically illustrates a system according to a preferred embodiment of the invention in an operating mode for heating the supply air with simultaneous defrosting of a water-exhaust air heat exchanger arranged in connection with the exhaust air duct;
Fig. 4 shows a schematic flow diagram of a water system in the system according to the invention, with a simplified, serial flow configuration which is suitable for applications where no hot and cold tap water is needed;
Fig. 5 shows a schematic flow diagram of a water system in the system according to the invention, with a parallel flow configuration which is suitable for applications where hot and cold tap water is needed;
Fig. 6 schematically illustrates the modular configuration of an indoor system according to a first advantageous embodiment of the invention; and
Fig. 7 schematically illustrates the modular configuration of a roof-mounted system according to a second advantageous embodiment of the invention.

### DESCRIPTION OF EMBODIMENTS OF THE INVENTION

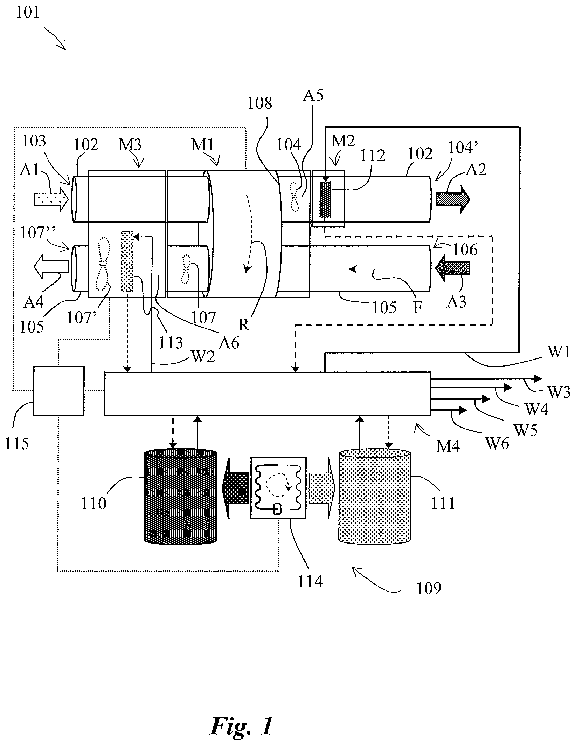

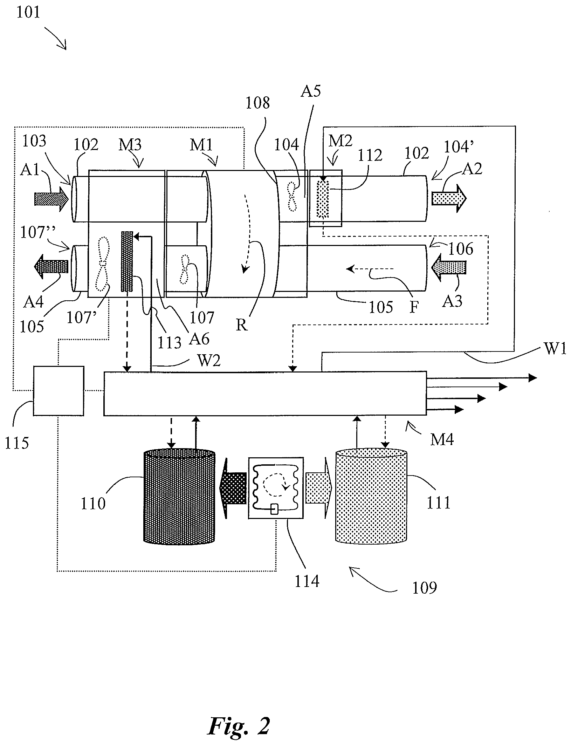

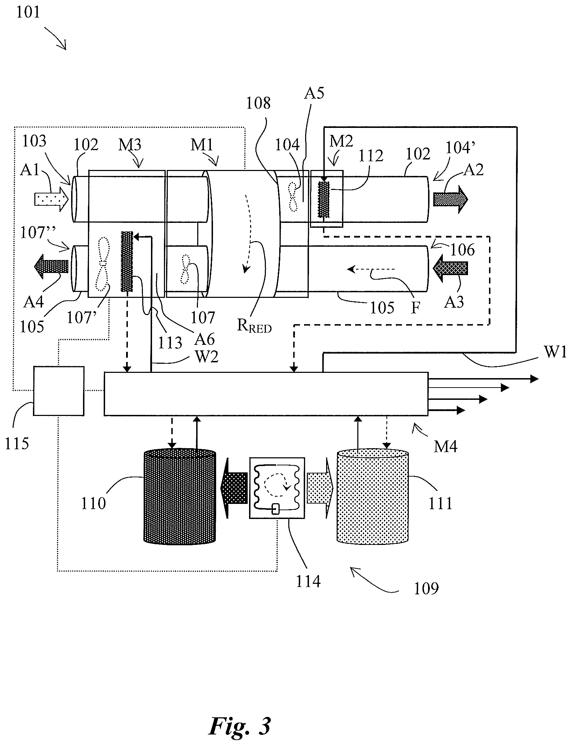

Figures 1-3 schematically illustrate the functional principle of a system for controlling the indoor climate in a building, wherein Fig. 1 shows the system 101 in an operating mode for heating the supply air with simultaneous heat recovery from the exhaust air, Fig. 2 shows the system in an operating mode for cooling the supply air with simultaneous transfer of heat to the exhaust air, and Fig. 3 shows the system according a preferred embodiment of the invention, in an operating mode for heating the supply air with simultaneous defrosting of a water-exhaust air heat exchanger arranged in connection with the exhaust air duct.

The system 101 according to the invention comprises a first air duct 102 having first input means 103 for introducing outdoor air A1 into the system and first output means 104, 104' for discharging outdoor air A2 treated in the system as supply air into the interior of the building. In the shown embodiment, the first input means 103 are constituted by an intake opening for outdoor air which, although it is not shown in the figures, can be provided with a grate and/or an air filter and/or an input fan for supply air. In the shown embodiment, the first output means are constituted by an output fan 104 for supply air, and also a discharge opening 104' for supply air which, although it is not shown in the figures, can be provided with a grate, a filter and/or be connected to a supply air conduit for transport of the supply air further on to local supply air means or comfort modules inside the building.

The system 101 according to the invention further comprises a second air duct 105 having second input means 106 for introducing exhaust air A3 from the interior of the building into the system and second output means 107, 107', 107" for discharging exhaust air A4 treated in the system into the outdoor air outside the building. In the shown embodiment, the second input means are constituted by an intake opening 106 for exhaust air which, although it is not shown in the figures, also can be connected to an exhaust air conduit for transport of air from local exhaust air means or climate modules inside the building. In the shown embodiment, the second output means are constituted by two output fans 107, 107' for exhaust air, and also by a discharge opening 107" for exhaust air.

The system 101 according to the invention furthermore comprises an exhaust-supply air heat exchanger 108, which is arranged in connection with said first 102 and second 105 air ducts for selective transfer of heat from said exhaust air A3 being treated in the system to said outdoor air A1 being treated in the system or from said outdoor air A1 being treated in the system to said exhaust air A3 being treated in the system.

The system 101 according to the invention furthermore comprises a water system 109 having a hot water circuit 110 and a cold water circuit 111, a water-supply air heat exchanger 112, which is arranged in connection with said first air duct 102 for selective connection to said hot water circuit 110 or said cold water circuit 111 for transfer of heat from said hot water circuit 110 to said outdoor air A1 being treated in the system or from said outdoor air A1 being treated in the system to said cold water circuit 111, a water-exhaust air heat exchanger 113, which is arranged in connection with said second air duct 105 for selective connection to said hot water circuit 110 or said cold water circuit 111 for transfer of heat from said hot water circuit 111 to said exhaust air A3 being treated in the system or from said exhaust air A3 being treated in the system to said cold water circuit 111, and a heat pump 114, which is arranged in connection with said water system 109 for selective transfer of heat from the hot water circuit 110 to the cold water circuit 111 or from the cold water circuit 111 to the hot water circuit 110.

It is characteristic of the system 101 according to the invention that the exhaust-supply air heat exchanger is designed as a rotary heat exchanger 108. Such rotary heat exchangers are used for energy recovery from exhaust air in some present ventilation systems. A rotary heat exchanger is based around a rotary wheel (a rotor) which usually consists of corrugated aluminium profiles. A portion of the rotary wheel being inside the exhaust air duct is heated by exhaust air flowing therethrough, whereupon the heated portion is gradually rotated further into the supply air duct to emit heat to supply air flowing therethrough.

It is also characteristic of the system 101 according to the invention that the rotary heat exchanger 108, with respect to the flow direction F in the second air duct 105, is positioned upstream of the water-exhaust air heat exchanger 113.

Furthermore, it is characteristic of the system 101 according to the invention that the rotary heat exchanger 108 has an efficiency correlating to rotational speed R and is provided with rotational speed control means for enabling efficient defrosting of the water-exhaust air heat exchanger 113, as is shown in Fig. 3, by means of a reduction of said rotational speed R_{RED} in order to obtain an elevated temperature of the exhaust air A6 passing through the water-exhaust air heat exchanger 113 in combination with the hot water circuit 110 simultaneously being connected to the water-exhaust air heat exchanger 113.

In the system 101 according to the invention, the rotational speed control means comprise an electric drive motor (not shown in the figures) for driving the rotation of the rotary heat exchanger 108, wherein the electric drive motor is adapted to be capable of being controlled to a normal rotational speed R during normal operation (Figs. 1 and 2), in order to provide the highest possible heat transfer capacity of the rotary heat exchanger, and to be capable of being controlled to said reduced rotational speed (R_{RED}) during a defrost cycle (Fig. 3), in order to provide the lowest possible heat transfer capacity of the rotary heat exchanger 108 that is appropriate taking into account other prevailing system conditions at the moment, and thereby the highest possible temperature of the exhaust air A6 passing through the water-exhaust air heat exchanger 113. In one advantageous embodiment, the rotational speed control means are adapted to be capable of bringing the reduced rotational speed R_{RED} of the rotary heat exchanger 108 to close to 0 during the defrost cycle.

In one advantageous embodiment, the system 101 comprises a pressure drop meter (not shown in the figures), which is adapted for measuring the pressure drop during the passage of the exhaust air through the water-exhaust air heat exchanger 113 in order to detect an eventual need of defrosting. The pressure drop meter comprises one or several transmitters or sensors for measuring the pressure drop, via air pressure, air velocities and/or air flows, on the exhaust air flow. The transmitters or sensors can be of one of the types electronic pressure transmitter, pitot tube, thermo-anemometer or fan-wheel anemometer, or of any other suitable type. Advantageously, the pressure drop meter can be adapted to be capable of emitting an output signal for initiating a defrost cycle and/or an output signal for controlling the rotational speed control means during such a defrost cycle.

In the preferred embodiment of the system 101 according to the invention, the water-supply air heat exchanger 112 and/or the water-exhaust air heat exchanger 113 are designed as a combined heating and cooling battery for transfer of heat to/from said air A1, A3 from/to said water circuits 110, 111.

In one advantageous embodiment of the system according to the invention (not shown in detail in the figures), the water-supply air heat exchanger 112 and/or the water-exhaust air heat exchanger 113 are designed for indirect transfer of heat between said air A1, A3 and the water circuits 110, 111 via an intermediate circuit with anti-freeze fluid solution.

In a first alternative embodiment of the system 101 according to the invention, the heat pump 114 is adapted for direct transfer of heat between the water circuits 110, 111. In a second alternative embodiment, the heat pump is instead adapted for indirect transfer of heat between the water circuits via an intermediate circuit.

In one advantageous embodiment, the system 101 according to the invention comprises a control unit 115, which is adapted for controlling the flows of air in the system by means of the input and output means 103, 104, 104', 106, 107, 107', 107", and the flows of fluid in the system by means of a flow control unit M4.

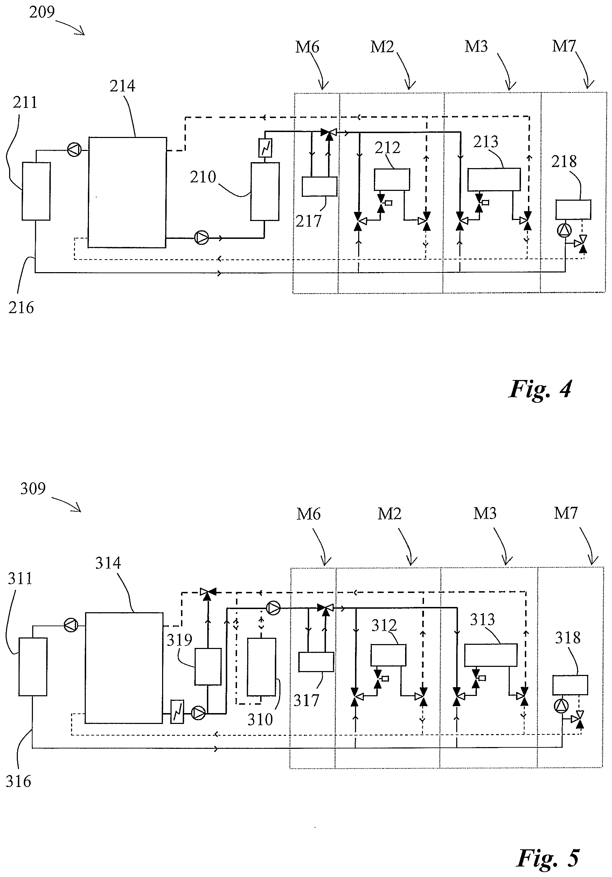

Figures 4 and 5, respectively, schematically show two alternative flow configurations of the water system included in the system according to the invention, wherein Fig. 4 shows a water system with a simplified, serial flow configuration which is suitable for applications where no hot and cold tap water is needed, whereas Fig. 5 shows a water system with a parallel flow configuration which is suitable for applications where hot and cold tap water is needed.

In one embodiment of the system according to the invention (Fig. 4), the water system 209 thus comprises a hot water tank 210 and a cold water tank 211, wherein both tanks are connected in series on a feed line 216.

In an alternative embodiment of the system according to the invention (Fig. 5), the water system 309 instead comprises a hot water tank 310 and a cold water tank 311, wherein the cold water tank 311 is connected in series with a feed line 316 and the hot water tank 310 is connected in parallel with the other functional units 319, 317, 312, 313, 318 of the water system, i.e. hot water heater 319, comfort heater 317, water-supply air heat exchanger 312, water-exhaust air heat exchanger 313 and comfort cooler 318. This embodiment ensures that the water system can always provide hot and cold tap water of desired, stable temperatures, and furthermore enables a very high COP of the heat pump module.

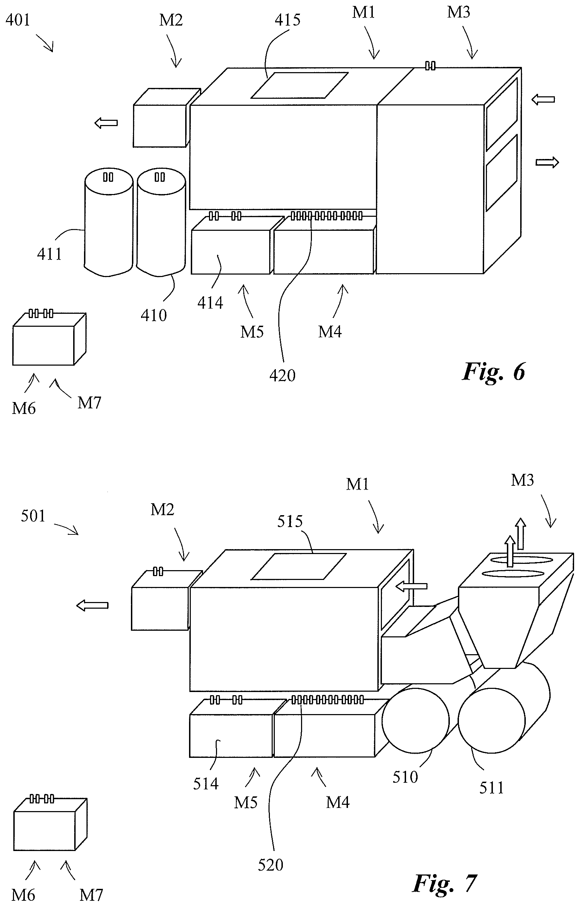

Figures 6 and 7, respectively, schematically illustrate the advantageous modular configuration of an indoor system and of a roof-mounted system, respectively, according to the invention. It is common to the two different system designs that the system 401; 501 comprises at least the following functional modules:
- a hot water tank 410; 510;
- a cold water tank 411; 511;
- a control unit 415; 515;
- an air handling module M1 comprising said rotary exhaust-supply air heat exchanger and being controlled by said control unit 415; 515;
- an air heating and cooling module M2 comprising said water-supply air heat exchanger;
- an energy recovery module M3 comprising said water-exhaust air heat exchanger and being controlled by said control unit 415; 515;
- a fluid flow control module M4 being controlled by said control unit 415; 515;
- a heat pump module M5 comprising said heat pump 414; 514 and being controlled by said control unit 415; 515;
- at least one local comfort module for water carried heating M6 and/or cooling M7 of supply air,
wherein said hot water tank 410; 510, said cold water tank 411; 511, said air heating and cooling module M2, said energy recovery module M3, and said at least one local comfort module for water carried heating M6 and/or cooling M7 of supply air are all designed for connection to said fluid flow control module M4, and wherein each of the majority of said functional modules 410; 510, 411; 511, M1, M2, M3, M4, M5, M6, M7 constitutes a pre-assembled and pretested subsystem provided with quick coupling means 420; 520 for connecting the subsystems into an integrated system 401; 501, which enables control of the indoor climate in said building using at least one control system 415; 515 interacting with and controlling the different subsystems.

When the reference numerals M1-M7 corresponding to the different functional modules are concerned, these have, when possible, also been inserted into the previously described Figures 1-5. The modular configuration and the quick coupling means gives the system according to the invention many advantages, such as easier transport, installation, interconnection and start-up. The system according to the invention has a compact configuration and can be installed by a single system installer. The use of single, overall control system minimizes the risk that different subsystems get into conflicts with each other, but embodiments of the invention comprising several separate subsystems interacting with each other, or in which the control system has a distributed topology and comprises a plurality of interconnected processor boards with individual calculation algorithms, are also conceivable. The system's heat pump module can be utilized as an exhaust air heat pump when there is a demand for ventilation or as an outdoor air heat pump when there is no demand for ventilation. Furthermore, it should be noted that the different functional modules can be connected into the system in ways different from what is seen in the figures, for example such that the module M6 is connected in a parallel flow configuration instead of in a serial configuration.

### PRIMARY OPERATING MODES

In the following, brief descriptions of three primary operating modes of the system will follow, with reference to Figures 1, 2 and 3, respectively. When the reference numerals W1-W6 are concerned, these indicate different water flows starting from the fluid flow control module M4 of the water system, wherein W1 refers to input flow to the water-supply air heat exchanger 112, W2 to input flow to the water-exhaust air heat exchanger 113, W3 to input flow to a local comfort module for water carried heating of supply air, W4 to input flow to a local comfort module for water carried cooling of supply air, W5 to input flow to radiators, and W6 to input flow to hot water production.

### Heating mode

Figure 1 shows the system in an operating mode for heating supply air with simultaneous heat recovery from exhaust air. In this operating mode, for example, cold outdoor air A1 with a temperature of -15 °C can be introduced into the system 101. After passage through the rotary heat exchanger 108 and heat exchange with warmer exhaust air A3, the temperature of the treated outdoor air A5 is increased to +13 °C. After passage past the water-supply air heat exchanger 112 and heat exchange with the hot water circuit W1, the temperature of the treated outdoor air is increased to 20 °C and it can be introduced as supply air A2 into the interior of the building, either directly by means of a suitable supply air means or via an air conduit to a local comfort module. Warm exhaust air A3 from the interior of the building, with a temperature of +22 °C, is introduced into the system 101. After passage through the rotary heat exchanger 108 and heat exchange with the cold outdoor air A1 flowing in, the temperature of the treated exhaust air A6 is reduced to -6 °C. After passage past the water-exhaust air heat exchanger 113 and heat exchange with the cold water circuit W2, the temperature of the treated exhaust air A4 is reduced to -16 °C and it can be discharged into the outdoor air outside the building.

### Cooling mode

Figure 2 shows the system in an operating mode for cooling supply air with simultaneous transfer of heat to exhaust air. In this operating mode, for example, warm outdoor air A1 with a temperature of +26 °C can be introduced into the system 101. After passage through the rotary heat exchanger 108 and heat exchange with colder exhaust air A3, the temperature of the treated outdoor air A5 is reduced to +24 °C. After passage past the water-supply air heat exchanger 112 and heat exchange with the cold water circuit W1, the temperature of the treated outdoor air is reduced to 16 °C and it can be introduced as supply air A2 into the interior of the building, either directly by means of a suitable supply air means or via an air conduit to a local comfort module. Warm exhaust air A3 from the interior of the building, with a temperature of +23 °C, is introduced into the system 101. After passage through the rotary heat exchanger 108 and heat exchange with the warmer outdoor air A1 flowing in, the temperature of the treated exhaust air A6 is increased to +25 °C. After passage past the water-exhaust air heat exchanger 113 and heat exchange with the hot water circuit W2, the temperature of the treated exhaust air A4 is increased to +30 °C and it can be discharged into the outdoor air outside the building.

### Defrosting mode

Figure 3 shows the system according to the invention in an operating mode for heating supply air with simultaneous defrosting of the water-exhaust air heat exchanger 113. In this operating mode, for example, cold outdoor air A1 with a temperature of -15 °C can be introduced into the system 101. In this operating mode, the rotary heat exchanger 108 is operated at a reduced rotational speed R_{RED}, for example a rotational speed corresponding to a reduction of the efficiency of the rotary heat exchanger to 50 % of the efficiency at normal rotational speed R (Figs. 1 and 2). After passage through the rotary heat exchanger 108 running at reduced rotational speed R_{RED} and heat exchange with warmer exhaust air A3, the temperature of the treated outdoor air A5 is increased to 0 °C. After passage past the water-supply air heat exchanger 112 and heat exchange with the hot water circuit W1, the temperature of the treated outdoor air is increased to 20 °C and it can be introduced as supply air A2 into the interior of the building, either directly by means of a suitable supply air means or via an air conduit to a local comfort module. Warm exhaust air A3 from the interior of the building, with a temperature of +22 °C, is introduced into the system 101. After passage through the rotary heat exchanger 108 running at reduced rotational speed R_{RED} and heat exchange with the cold outdoor air A1 flowing in, the temperature of the treated exhaust air A6 is reduced to +8 °C. After passage past the water-exhaust air heat exchanger 113 and heat exchange with the hot water circuit W2, the temperature of the treated exhaust air A4 is reduced to +4 °C and it can be discharged into the outdoor air outside the building. Thus, in comparison to the previously described heating mode according to Fig. 1, the reduced rotational speed R_{RED} of the rotary heat exchanger in the defrosting mode results in an elevated temperature of the exhaust air A6 passing through the water-exhaust air heat exchanger 113. In combination with the hot water circuit W1 simultaneously being connected to the water-exhaust air heat exchanger 113, a considerably elevated temperature of the metal surfaces which are to be defrosted, and a very short defrost cycle in comparison to previously known systems, are obtained. The local temperature increase obtained in the water-exhaust air heat exchanger 113 in the defrosting mode is of the order of 20 °C in the described example, this in comparison to when the system is operated in the previously described heating mode according to Fig. 1. At higher outdoor temperatures, even larger local temperature increases and even shorter defrost cycles are possible, since a larger reduction of the rotational speed and the efficiency of the rotary heat exchanger can be utilized.

### ALTERNATIVE OPERATING MODES

In order to give a better understanding of the many possibilities offered by the present invention, brief summaries of a number of different operating modes possible with the system according to the invention will follow below.
Alternative 1 (serial flow configuration according to Fig. 4)
   Heating of supply air and comfort modules
   Cooling of exhaust air and comfort modules
   Heat pump active or inactive
   No defrosting
Alternative 2 (serial flow configuration according to Fig. 4)
   Cooling of supply air and comfort modules
   Heating of exhaust air and comfort modules
   Heat pump active or inactive
Alternative 3 (serial flow configuration according to Fig. 4)
   Heating of supply air and comfort modules
   Cooling of comfort modules
   Heat pump active or inactive
   Defrosting
Alternative 4 (parallel flow configuration according to Fig. 5)
   Heating of supply air and comfort modules
   Cooling of exhaust air and comfort modules
   Heat pump active, No charging of tank
   No defrosting, No heating of tap water
Alternative 5 (parallel flow configuration according to Fig. 5)
   Heating of supply air and comfort modules
   Cooling of exhaust air and comfort modules
   Heat pump active, Charging of tank
   No defrosting, No heating of tap water
Alternative 6 (parallel flow configuration according to Fig. 5)
   Heating of supply air and comfort modules
   Cooling of exhaust air and comfort modules
   Heat pump active, Discharging of tank
   No defrosting, Heating of tap water
Alternative 7 (parallel flow configuration according to Fig. 5)
   Heating of supply air and comfort modules
   Cooling of comfort modules
   Heat pump active, No charging of tank
   Defrosting, No heating of tap water
Alternative 8 (parallel flow configuration according to Fig. 5)
   Cooling of supply air and comfort modules
   Heating of exhaust air and comfort modules
   Heat pump active, No charging of tank
   No defrosting, No heating of tap water
Alternative 9 (parallel flow configuration according to Fig. 5)
   Cooling of supply air and comfort modules
   Heating of comfort modules
   Heat pump active, Discharging of tank
   No defrosting, Heating of tap water
Alternative 10 (serial flow configuration according to Fig. 4)
   One supply duct for air
   Cooling of comfort modules, chilled beams
   Heating of comfort modules, radiators or floor heating system
Alternative 11 (serial flow configuration according to Fig. 4)
   One supply duct for air
   Cooling of supply air
   Heating of radiators or floor heating system
Alternative 12 (serial flow configuration according to Fig. 4)
   One or two supply ducts for air
   Cooling of supply air
   Heating of supply air

In the foregoing, a number of embodiments of the invention have been described with reference to the figures in the accompanying drawings. It should be understood that the described embodiments and the details in the figures should only be regarded as examples, and that many other embodiments of the invention are possible within the scope of the following claims.

## Claims

1. A system for heating supply air, with simultaneous defrosting of a water-exhaust air heat exchanger, when controlling the indoor climate in a building, wherein the system (101; 401; 501) at least comprises
- a first air duct (102) having first input means (103) for introducing outdoor air (A1) into the system and first output means (104, 104') for discharging outdoor air (A2) treated in the system as supply air into the interior of the building,
- a second air duct (105) having second input means (106) for introducing exhaust air (A3) from the interior of the building into the system and second output means (107, 107', 107") for discharging exhaust air (A4) treated in the system into the outdoor air outside the building,
- an exhaust-supply air heat exchanger (108), which is arranged in connection with said first (102) and second (105) air ducts for selective transfer of heat from said exhaust air (A3) being treated in the system to said outdoor air (A1) being treated in the system or from said outdoor air (A1) being treated in the system to said exhaust air (A3) being treated in the system,
- a water system (109; 209; 309) having a hot water circuit (110) and a cold water circuit (111),
- a water-supply air heat exchanger (112), which is arranged in connection with said first air duct (102) for selective connection to said hot water circuit (110) or said cold water circuit (111) for transfer of heat from said hot water circuit (110) to said outdoor air (A1) being treated in the system or from said outdoor air (A1) being treated in the system to said cold water circuit (111),
- a water-exhaust air heat exchanger (113), which is arranged in connection with said second air duct (105) for selective connection to said hot water circuit (110) or said cold water circuit (111) for transfer of heat from said hot water circuit (111) to said exhaust air (A3) being treated in the system or from said exhaust air (A3) being treated in the system to said cold water circuit (111),
- a heat pump (114; 214; 314; 414; 514), which is arranged in connection with said water system (109) for selective transfer of heat from the hot water circuit (110) to the cold water circuit (111) or from the cold water circuit (111) to the hot water circuit (110),
whereby the exhaust-supply air heat exchanger is designed as a rotary heat exchanger(108),
the rotary heat exchanger (108), with respect to the flow direction (F) in the second air duct (105), is positioned upstream of the water-exhaust air heat exchanger (113), and
the rotary heat exchanger (108) has an efficiency correlating to rotational speed (R), **characterized in that** the rotary heat exchanger (108) is provided with rotational speed control means for enabling defrosting of the water-exhaust air heat exchanger (113) by means of a reduction of said rotational speed (R_{RED}) in order to obtain an elevated temperature of the exhaust air (A6) passing through the water-exhaust air heat exchanger (113) in combination with the hot water circuit (110) simultaneously being connected to the water-exhaust air heat exchanger (113),
wherein the rotational speed control means comprise an electric drive motor for driving the rotation of the rotary heat exchanger (108), wherein the electric drive motor is adapted to be capable of being controlled to a normal rotational speed (R) during normal operation, in order to provide the highest possible heat transfer capacity of the rotary heat exchanger, and to be capable of being controlled to said reduced rotational speed (R_{RED}) during a defrost cycle, in order to provide the lowest possible heat transfer capacity of the rotary heat exchanger (108) that is appropriate taking into account other prevailing system conditions at the moment, and thereby the highest possible temperature of the exhaust air (A6) passing through the water-exhaust air heat exchanger (113), wherein the hot water circuit provides hot water for use in the water-supply air heat exchanger in said heating of supply air and in the water-exhaust air heat exchanger in the defrosting thereof.

2. The system according to claim 1,
**characterized in that** the rotational speed control means are adapted to be capable of bringing the reduced rotational speed (R_{RED}) of the rotary heat exchanger (108) to close to 0 during the defrost cycle.

3. The system according to any one of the preceding claims,
**characterized in that** the system comprises a pressure drop meter adapted for measuring the pressure drop during the passage of the exhaust air through the water-exhaust air heat exchanger (113) in order to detect an eventual need of defrosting.

4. The system according to any one of the preceding claims,
**characterized in that** said water-supply air heat exchanger (112) and/or said water-exhaust air heat exchanger (113) are designed as a combined heating and cooling battery for transfer of heat to/from said air (A1, A3) from/to said water circuits (110, 111).

5. The system according to any one of the claims 1-4,
**characterized in that** said heat pump (114) is adapted for direct transfer of heat between said water circuits (110, 111).

6. The system according to any one of the claims 1-4,
**characterized in that** said heat pump is adapted for indirect transfer of heat between said water circuits via an intermediate circuit.

7. The system according to any one of the preceding claims,
**characterized in that** the system comprises a control unit (115), which is adapted for controlling the flows of air in the system by means of said input and output means (103, 104, 104', 106, 107, 107', 107") and the flows of fluid in the system by means of a flow control unit (M4).

8. The system according to any one of the claims 1-7,
**characterized i**n that said water system (209) comprises a hot water tank (210) and a cold water tank (211), wherein both tanks are connected in series on a feed line (216).

9. The system according to any one of the claims 1-7,
**characterized in that** said water system (309)) comprises a hot water tank (310) and a cold water tank (311), wherein the cold water tank (311) is connected in series with a feed line (316) and the hot water tank (310) is connected in parallel with the other functional units (319, 317, 312, 313, 318) of the water system.

## Patentansprüche

1. System zum Erhitzen von Zuluft mit gleichzeitigem Enteisen eines Wasser-Abluft-Wärmetauschers beim Steuern des Raumklimas in einem Gebäude, wobei das System (101; 401; 501) mindestens Folgendes umfasst:
- einen ersten Luftkanal (102) mit ersten Eintrittsmitteln (103) zum Einleiten von Außenluft (A1) in das System und ersten Austrittsmitteln (104, 104') zum Abführen von im System behandelter Außenluft (A2) als Zuluft ins Innere des Gebäudes,
- einen zweiten Luftkanal (105) mit zweiten Eintrittsmitteln (106) zum Einleiten von Abluft (A3) aus dem Inneren des Gebäudes in das System und zweiten Austrittsmitteln (107, 107', 107") zum Abführen von im System behandelter Abluft (A4) in die Außenluft außerhalb des Gebäudes,
- einen Abluft-Zuluft-Wärmetauscher (108), der in Verbindung mit dem ersten (102) und zweiten (105) Luftkanal zur gezielten Übertragung von Wärme von der in dem System behandelten Abluft (A3) auf die in dem System behandelte Außenluft (A1) oder von der in dem System behandelten Außenluft (A1) auf die in dem System behandelte Abluft (A3) angeordnet ist,
- ein Wassersystem (109; 209; 309) mit einem Warmwasserkreislauf (110) und einem Kaltwasserkreislauf (111),
- einen Wasser-Zuluft-Wärmetauscher (112), der in Verbindung mit dem ersten Luftkanal (102) zum gezielten Verbinden mit dem Warmwasserkreislauf (110) oder dem Kaltwasserkreislauf (111) zur Übertragung von Wärme aus dem Warmwasserkreislauf (110) auf die in dem System behandelte Außenluft (A1) oder von der in dem System behandelten Außenluft (A1) auf den Kaltwasserkreislauf (111) angeordnet ist,
- einen Wasser-Abluft-Wärmetauscher (113), der in Verbindung mit dem zweiten Luftkanal (105) zum gezielten Verbinden mit dem Warmwasserkreislauf (110) oder dem Kaltwasserkreislauf (111) zur Übertragung von Wärme aus dem Warmwasserkreislauf (111) auf die in dem System behandelte Abluft (A3) oder von der in dem System behandelten Abluft (A3) auf den Kaltwasserkreislauf (111) angeordnet ist,
- eine Wärmepumpe (114; 214; 314; 414; 514), die in Verbindung mit dem Wassersystem (109) zur gezielten Übertragung von Wärme aus dem Warmwasserkreislauf (110) auf den Kaltwasserkreislauf (111) oder aus dem Kaltwasserkreislauf (111) auf den Warmwasserkreislauf (110) angeordnet ist,
wobei
der Abluft-Zuluft-Wärmetauscher als Rotationswärmetauscher (108) ausgestaltet ist,
der Rotationswärmetauscher (108), bezogen auf die Strömungsrichtung (F) in dem zweiten Luftkanal (105), vor dem Wasser-Abluft-Wärmetauscher (113) platziert ist, und
der Rotationswärmetauscher (108) einen Wirkungsgrad aufweist, der mit der Drehzahl (R) korreliert, **dadurch gekennzeichnet, dass** der Rotationswärmetauscher (108) mit Drehzahlsteuerungsmitteln zum Ermöglichen des Enteisens des Wasser-Abluft-Wärmetauschers (113) durch eine Verminderung der Drehzahl (R_{RED}) versehen ist, damit eine erhöhte Temperatur der Abluft (A6) erhalten wird, die durch den Wasser-Abluft-Wärmetauscher (113) strömt, in Verbindung mit dem Warmwasserkreislauf (110), der gleichzeitig mit dem Wasser-Abluft-Wärmetauscher (113) verbunden ist,
wobei die Drehzahlsteuerungsmittel einen elektrischen Antriebsmotor zum Antreiben des Rotationswärmetauschers (108) umfassen, wobei der elektrische Antriebsmotor so ausgelegt ist, dass er in der Lage ist, während eines Normalbetriebs auf eine normale Drehzahl (R) gesteuert zu werden, damit für die höchstmögliche Wärmeübertragungsleistung des Rotationswärmetauschers gesorgt wird, und dass er in der Lage ist, während eines Enteisungszyklus auf die verminderte Drehzahl (R_{RED}) gesteuert zu werden, damit für die unter Berücksichtigung weiterer vorherrschender Systembedingungen zu dem Moment geringstmögliche geeignete Wärmeübertragungsleistung des Rotationswärmetauschers (108) und dadurch die höchstmögliche Temperatur der durch den Wasser-Abluft-Wärmetauscher (113) strömenden Abluft (A6) gesorgt wird, wobei der Warmwasserkreislauf warmes Wasser zur Verwendung im Wasser-Zuluft-Wärmetauscher bei der Erwärmung der Zuluft und in dem Wasser-Abluft-Wärmetauscher beim Enteisen desselben liefert.

2. System nach Anspruch 1,
**dadurch gekennzeichnet, dass** die Drehzahlsteuerungsmittel so ausgelegt sind, dass sie in der Lage sind, die verminderte Drehzahl (R_{RED}) des Rotationswärmetauschers (108) während des Enteisungszyklus auf nahe 0 zu bringen.

3. System nach einem der vorhergehenden Ansprüche,
**dadurch gekennzeichnet, dass** das System eine Druckabfall-Messvorrichtung umfasst, die so ausgelegt ist, dass sie den Druckabfall während des Strömens der Abluft durch den Wasser-Abluft-Wärmetauscher (113) misst, damit sie einen möglichen Enteisungsbedarf erkennt.

4. System nach einem der vorhergehenden Ansprüche,
**dadurch gekennzeichnet, dass** der Wasser-Zuluft-Wärmetauscher (112) und/oder der Wasser-Abluft-Wärmetauscher (113) als kombinierte Heiz- und Kühlbatterie für die Übertragung von Wärme auf die/von der Luft (A1, A3) aus den/auf die Wasserkreisläufe(n) (110, 111) ausgestaltet sind.

5. System nach einem der Ansprüche 1 bis 4,
**dadurch gekennzeichnet, dass** die Wärmepumpe (114) für eine direkte Wärmeübertragung zwischen den Wasserkreisläufen (110, 111) ausgelegt ist.

6. System nach einem der Ansprüche 1 bis 4,
**dadurch gekennzeichnet, dass** die Wärmepumpe für eine indirekte Wärmeübertragung zwischen den Wasserkreisläufen über einen Zwischenkreislauf ausgelegt ist.

7. System nach einem der vorhergehenden Ansprüche,
**dadurch gekennzeichnet, dass** das System eine Steuerungseinheit (115) umfasst, die so ausgelegt ist, dass sie die Luftströme im System mit den Eintritts- und Austrittsmitteln (103, 104, 104', 106, 107, 107', 107") und die Fluidströme im System mit einer Stromsteuerungseinheit (M4) steuert.

8. System nach einem der Ansprüche 1 bis 7,
**dadurch gekennzeichnet, dass** das Wassersystem (209) einen Warmwasserbehälter (210) und einen Kaltwasserbehälter (211) umfasst, wobei beide Behälter an einer Zuleitung (216) in Reihe verbunden sind.

9. System nach einem der Ansprüche 1 bis 7,
**dadurch gekennzeichnet, dass** das Wassersystem (309) einen Warmwasserbehälter (310) und einen Kaltwasserbehälter (311) umfasst, wobei der Kaltwasserbehälter (311) in einer Reihe mit einer Zuleitung (316) verbunden ist und der Warmwasserbehälter (310) parallel zu den anderen Funktionseinheiten (319, 317, 312, 313, 318) des Wassersystems verbunden ist.

## Revendications

1. Système permettant de chauffer de l'air fourni avec un dégivrage simultané d'un échangeur de chaleur d'eau-air d'échappement, dans le cadre du contrôle de la climatisation intérieure d'un bâtiment, dans lequel le système (101 ; 401 ; 501) comprend au moins
- une première conduite d'air (102) possédant un premier moyen d'entrée (103) permettant l'introduction de l'air extérieur (A1) dans le système et un premier moyen de sortie (104, 104') permettant l'évacuation de l'air extérieur (A2) traité dans le système en tant qu'air de ventilation dans l'intérieur du bâtiment,
- une seconde conduite d'air (105) possédant un second moyen d'entrée (106) permettant l'introduction de l'air évacué (A3) de l'intérieur du bâtiment dans le système et un second moyen de sortie (107, 107', 107") permettant l'évacuation de l'air évacué (A4) traité dans le système dans l'air extérieur à l'extérieur du bâtiment,
- un échangeur de chaleur d'air par approvisionnement en gaz échappement (108), qui est agencé en lien avec lesdites première (102) et seconde (105) conduites d'air pour le transfert sélectif de la chaleur dudit air évacué (A3) traité dans le système audit air extérieur (A1) traité dans le système ou dudit air extérieur (A1) traité dans le système audit l'air évacué (A3) traité dans le système,
- un système d'eau (109 ; 209 ; 309) possédant un circuit d'eau chaude (110) et un circuit d'eau froide (111),
- un échangeur de chaleur d'air par approvisionnement en eau (112), qui est agencé en lien avec ladite première conduite d'air (102) pour un raccordement sélectif audit circuit d'eau chaude (110) ou audit circuit d'eau froide (111) pour le transfert de chaleur dudit circuit d'eau chaude (110) audit air extérieur (A1) traité dans le système ou dudit air extérieur (A1) traité dans le système audit circuit d'eau froide (111),
- un échangeur de chaleur d'eau-air d'échappement (113), qui est agencé en lien avec ladite seconde conduite d'air (105) pour le raccordement sélectif audit circuit d'eau chaude (110) ou ledit circuit d'eau froide (111) pour le transfert de chaleur dudit circuit d'eau chaude (111) audit air évacué (A3) traité dans le système ou dudit air évacué (A3) traité dans le système audit circuit d'eau froide (111),
- une pompe à chaleur (114 ; 214 ; 314 ; 414 ; 514), qui est agencée en lien avec ledit système d'eau (109) pour le transfert sélectif de chaleur du circuit d'eau chaude (110) au circuit d'eau froide (111) ou du circuit d'eau froide (111) au circuit d'eau chaude (110), moyennant quoi l'échangeur de chaleur d'air par approvisionnement en gaz échappement est conçu comme un échangeur de chaleur rotatif (108), l'échangeur de chaleur rotatif (108), par rapport à la direction de l'écoulement (F) dans la seconde conduite d'air (105), est positionné en amont de l'échangeur de chaleur d'eau-air d'échappement (113), et
l'échangeur de chaleur rotatif (108) possède une corrélation de rendement par rapport à la vitesse de rotation (R), **caractérisé en ce que** l'échangeur de chaleur rotatif (108) est doté de moyens de contrôle de la vitesse de rotation permettant d'activer le dégivrage de l'échangeur de chaleur d'eau-air d'échappement (113) au moyen d'une réduction de ladite vitesse de rotation (R_{RED}) afin d'obtenir une élévation de la température de l'air évacué (A6) passant à travers l'échangeur de chaleur d'eau-air d'échappement (113) en combinaison avec le circuit d'eau chaude (110) raccordé simultanément à l'échangeur de chaleur d'eau-air d'échappement (113),
dans lequel le moyen de contrôle de la vitesse de rotation comprend un moteur d'entraînement électrique permettant l'entraînement de la rotation de l'échangeur de chaleur rotatif (108), le moteur d'entraînement électrique étant adapté pour qu'il puisse être contrôlé à une vitesse de rotation normale (R) au cours d'un fonctionnement normal, afin de fournir la capacité de transfert de chaleur la plus élevée possible de l'échangeur de chaleur rotatif, et pour qu'il puisse être contrôlé à ladite vitesse de rotation réduite (R_{RED}) au cours d'un cycle de dégivrage, afin de fournir la capacité de transfert de chaleur la plus faible possible de l'échangeur de chaleur rotatif (108) qui est appropriée en tenant compte des autres conditions de système prévalant à ce moment, et ainsi la température la plus élevée possible de l'air évacué (A6) passant à travers l'échangeur de chaleur d'eau-air d'échappement (113), dans lequel le circuit d'eau chaude fournit de l'eau chaude à utiliser dans l'échangeur de chaleur d'air par approvisionnement en eau dans ledit chauffage de l'air de ventilation et dans l'échangeur de chaleur d'eau-air d'échappement dans le dégivrage de celui-ci.

2. Système selon la revendication 1, **caractérisé en ce que** les moyens de contrôle de la vitesse de rotation sont adaptés pour être en mesure de porter la vitesse de rotation réduite (R_{RED}) de l'échangeur de chaleur rotatif (108) proche de 0 au cours du cycle de dégivrage.

3. Système selon l'une quelconque des revendications précédentes,
**caractérisé en ce que** le système comprend un compteur de chute de pression adapté pour mesurer la chute de pression au cours du passage de l'air évacué à travers l'échangeur de chaleur d'eau-air d'échappement (113) afin de détecter un éventuel besoin de dégivrage.

4. Système selon l'une quelconque des revendications précédentes,
**caractérisé en ce que** ledit échangeur de chaleur d'air par approvisionnement en eau (112) et/ou ledit échangeur de chaleur d'eau-air d'échappement (113) sont conçus sous forme de batterie de chauffage et de refroidissement combinée pour le transfert de chaleur vers/depuis ledit air (A1, A3) depuis/vers lesdits circuits d'eau (110, 111).

5. Système selon l'une quelconque des revendications 1 à 4, **caractérisé en**
**ce que** ladite pompe à chaleur (114) est adaptée pour le transfert direct de chaleur entre lesdits circuits d'eau (110, 111).

6. Système selon l'une quelconque des revendications 1 à 4, **caractérisé en**
**ce que** ladite pompe à chaleur est adaptée pour le transfert indirect de chaleur entre lesdits circuits d'eau via un circuit intermédiaire.

7. Système selon l'une quelconque des revendications précédentes,
**caractérisé en ce que** le système comprend une unité de contrôle (115), qui est adaptée pour le contrôle des flux d'air dans le système au moyen desdits moyens d'entrée et de sortie (103, 104, 104', 106, 107, 107', 107") et les écoulements de fluide dans le système au moyen d'une unité de contrôle des écoulements (M4).

8. Système selon l'une quelconque des revendications 1 à 7, **caractérisé en**
**ce que** ledit système d'eau (209) comprend un réservoir d'eau chaude (210) et un réservoir d'eau froide (211), les deux réservoirs étant raccordés en série sur une conduite d'alimentation (216).

9. Système selon l'une quelconque des revendications 1 à 7, **caractérisé en**
**ce que** ledit système d'eau (309)) comprend un réservoir d'eau chaude (310) et un réservoir d'eau froide (311), le réservoir d'eau froide (311) étant raccordé en série avec une conduite d'alimentation (316) et le réservoir d'eau chaude (310) étant raccordé en parallèle avec les autres unités fonctionnelles (319, 317, 312, 313, 318) du système d'eau.
